# EUROPÄISCHE PATENTANMELDUNG

(11) **EP 3 282 435 A1**
(43) Veröffentlichungstag der Anmeldung: **14.02.2018**
(21) Anmeldenummer: 16183370.2
(22) Anmeldetag: 09.08.2016
(51) Int. Cl.: G08C 25/00, G05B 19/042, G06F 3/0488

(54) **VERFAHREN ZUM SICHEREN BEDIENEN EINER VORRICHTUNG UND SYSTEM ZUM SICHEREN BEDIENEN EINER VORRICHTUNG**

(71) Anmelder: Siemens Aktiengesellschaft, 80333 München (DE)
(72) Erfinder: Glaser, Maximilian, 91365 Weilersbach (DE); Kersten, Thomas, 91080 Marloffstein (DE); Singer, Marc, 91301 Forchheim (DE)

(57) **Zusammenfassung**

Die Erfindung betrifft ein Verfahren zum Sicheren Bedienen einer Vorrichtung (50), wobei ein Bediener (1) ein Eingabemittel (2) betätigt und dadurch ein Bedienbefehl (3) an eine Automatisierungskomponente (10) abgesetzt wird und der Bedienbefehl (3) in der Automatisierungskomponente (10) ausgewertet wird und ein Steuerbefehl (4) für die Vorrichtung (50) erzeugt wird. Erfindungsgemäß ist vorgesehen, dass der Bediener (1) an seinem Körper eine Sensorvorrichtung (20) trägt, wobei die Sensorvorrichtung (20) derart betrieben wird, dass die Betätigung des Eingabemittels (2) als ein Datensatz (21) erfasst wird und an die Automatisierungskomponente (10) weitergeleitet wird, wobei in der Automatisierungskomponente (10) der erfasste Datensatz (21) mit einem Soll-Datensatz (22) für das Eingabemittel (2) verglichen wird, wobei beim Erfüllen eines Vergleichskriteriums der Steuerbefehl (4) für die Vorrichtung (50) für gültig erklärt wird und an die Vorrichtung (50) übermittelt wird.

## Beschreibung

Die Erfindung betrifft ein Verfahren zum sicheren Bedienen einer Vorrichtung, wobei ein Bediener ein Eingabemittel betätigt und dadurch ein Bedienbefehl an eine Automatisierungskomponente abgesetzt wird und der Bedienbefehl in der Automatisierungskomponente ausgewertet wird und ein Steuerbefehl für die Vorrichtung erzeugt wird.

Des Weiteren betrifft die Erfindung ein System zum sicheren Bedienen einer Vorrichtung, umfassend ein Eingabemittel, eine Sensorvorrichtung, ausgestaltet um an einem Körper eines Bedieners getragen werden zu können, eine Automatisierungskomponente, wobei das Eingabemittel über eine erste Datenverbindung und die Sensorvorrichtung über eine zweite Datenverbindung mit der Automatisierungskomponente verbunden ist.

Beispielsweise müssen in automatisierten Fertigungssystemen für einen Bediener in einem Gefahrenbereich Sicherheitsmaßnahmen vorhanden sein. Für eine sichere Bedienung und Abschaltung von Anlagen muss in gefahrbringenden Situationen zusätzlich zu einem Eingabemittel ein Zustimmtaster betätigt werden. Im Sinne der Erfindung ist unter Eingabemittel beispielsweise eine Taste, ein Joy-Stick, eine druckempfindliche Fläche, ein kapazitiver/resistiver-Touch, ein Hebel, ein Drehknopf, ein Handrad usw. zu verstehen.

Darüber hinaus setzt sich im industriellen Umfeld immer mehr der Trend der neuen Bedienphilosophie mit Touch-Screen durch. Aber als sichere Eingabegeräte dienen derzeit nur redundant ausgeführte Taster, Schalter und anwendungsspezifische Zusatzkomponenten. Eine Eingabe mit einem Touch-Screen wird aktuell nur für nicht sichere Eingaben verwendet.

Es ist Aufgabe der vorliegenden Erfindung ein Verfahren und ein System zum sicheren Bedienen einer Maschine bereit zu stellen, bei welchem auf zusätzliche hardwaremäßig ausgeführte Zustimmtaster verzichtet werden kann.

Für das eingangs genannte Verfahren wird die Aufgabe dadurch gelöst, dass der Bediener an seinem Körper eine Sensorvorrichtung trägt, wobei die Sensorvorrichtung derart betrieben wird, dass die Betätigung des Eingabemittels als ein Datensatz erfasst wird und an die Automatisierungskomponente weitergeleitet wird, wobei in der Automatisierungskomponente der erfasste Datensatz mit einem Soll-Datensatz für das Eingabemittel verglichen wird, wobei beim Erfüllen eines Vergleichskriteriums der Steuerbefehl für die Vorrichtung für gültig erklärt wird und an die Vorrichtung übermittelt wird.

Erfindungsgemäß wurde der zuvor notwendige Zustimmtaster nun durch eine tragbare Sensorvorrichtung, welche während der Anwendung am Körper des Benutzers befestigt ist, ersetzt. Die tragbare Sensorvorrichtung ist darauf ausgelegt, die Betätigung des Eingabemittels durch den Bediener aufzuzeichnen und quasi in einem Datensatz zu bestätigen, dass der Bediener wirklich in dem Moment gerade das Eingabemittel auch betätigt hat.

Im Hinblick auf eine zweikanalige redundante Auswertung wird das Betätigen des Eingabemittels über einen ersten Kanal und einen zweiten Kanal ausgewertet, wobei der erste Kanal über eine erste Datenverbindung zwischen dem Eingabemittel und der Automatisierungskomponente und der zweite Kanal über eine zweite Datenverbindung zwischen der Sensorvorrichtung und der Automatisierungskomponente aufgebaut wird.

In einer vorteilhaften Ausgestaltung wird bei dem Verfahren durch den Bediener als Sensorvorrichtung eine Datenbrille mit Kamera genutzt und die Bedienhandlung mit der Kamera erfasst. Bei Verwendung einer Datenbrille und bei Verwendung des Eingabemittels als ein berührungsempfindlicher Bildschirm wird in der Automatisierungskomponente verfahrensgemäß ein stetiger Abgleich zwischen einem Kamerabild und einem auf dem berührungsempfindlichen Bildschirm dargestellten Objekt erfolgen. Die Datenbrille dient der Verifikation der Anzeige bzw. der Eingabe über die eingebaute Kamera. Ist der Bildinhalt, welcher durch die Datenbrille geliefert wird, mit dem Bildinhalt des Displays, insbesondere wenn ein Bedienobjekt auf dem Display als Eingabemittel verwendet wird, gleich, so kann eine sichere Eingabe bestätigt werden.

In einer alternativen Ausgestaltung trägt verfahrensgemäß der Bediener einen Datenhandschuh, wobei unter Verwendung eines Ortungssystems der aktuelle Aufenthaltsort des Datenhandschuhs permanent ermittelt wird und zusätzlich ein Betätigen des Eingabemittels ebenfalls durch den Datenhandschuh ermittelt wird. Ist der Ort des Eingabemittels bekannt, beispielsweise durch eine zuvor ausgeführte Projektierung in der Automatisierungskomponente, und wird der Aufenthaltsort des Datenhandschuhs, welcher an einer Hand des Bedieners getragen wird, permanent überwacht, so kann unter Zuhilfenahme eines Koordinatensystems genau gesagt werden, wo der Bediener mit seiner Hand sich im Moment der Betätigung befindet. Befindet sich der Bediener mit seiner Hand und dem angezogenen Datenhandschuh im Moment der Betätigung genau am Ort des Eingabemittels, so kann von einer sicheren Eingabe ausgegangen werden.

Ebenso wird die eingangs genannte Aufgabe durch ein System zum sicheren Bedienen einer Vorrichtung gelöst. Das System umfasst ein Eingabemittel, eine Sensorvorrichtung, ausgestaltet um an einem Körper eines Bedieners getragen werden zu können, eine Automatisierungskomponente, wobei das Eingabemittel über eine erste Datenverbindung und die Sensorvorrichtung über eine zweite Datenverbindung mit der Automatisierungskomponente verbunden ist. Das Eingabemittel ist dabei ausgestaltet, bei Betätigung einen Eingabebefehl an die Automatisierungskomponente abzusetzen, wobei die Automatisierungskomponente weiterhin dazu ausgestaltet ist, auf Basis des Bedienbefehls einen Steuerbefehl an die Vorrichtung abzusetzen.

Die Automatisierungskomponente weist nun ein Vergleichsmittel auf, welches ausgestaltet ist, einen von der Sensorvorrichtung beim Betätigen des Eingabemittels erfassten Datensatz mit einem Soll-Datensatz für das Eingabemittel zu vergleichen, weiterhin ist ein Freigabemittel vorhanden, welches ausgestaltet ist, abhängig von einem Vergleichsergebnis den Steuerbefehl für die Vorrichtung für gültig zu erklären.

Im Hinblick auf ein zweikanaliges redundantes System ist durch die erste Datenverbindung ein erster Kanal und durch die zweite Datenverbindung ein zweiter Kanal gebildet und damit ein zweikanaliges sicheres Eingabesystem vorhanden.

In einer vorteilhaften Ausgestaltung ist die Sensorvorrichtung als eine Datenbrille mit Kamera ausgestaltet.

Bei Ausgestaltung der Sensorvorrichtung als eine Datenbrille mit Kamera kann das Eingabemittel als ein berührungsempfindlicher Bildschirm ausgestaltet sein, und die Automatisierungskomponente ist weiterhin dazu ausgestaltet, einen stetigen Abgleich zwischen einem Kamerabild der Kamera und einem auf dem berührungsempfindlichen Bildschirm dargestellten Bedienobjekt durchzuführen. Die Datenbrille dient dabei der Verifikation der Anzeige bzw. der Eingabe auf dem berührungsempfindlichen Bildschirm, wobei die Eingabe über die eingebaute Kamera protokolliert wird. Mittels eines stetigen Abgleichs zwischen dem dargestellten Bildinhalten und dem Kamerabild der Datenbrille kann eine sichere Eingabe realisiert werden.

In einer alternativen Ausgestaltung ist die Sensorvorrichtung als ein Datenhandschuh ausgestaltet und weiterhin ist ein Ortungssystem vorhanden, welches ausgestaltet ist, den aktuellen Aufenthaltsort des Datenhandschuhs permanent zu ermitteln, zusätzlich weist der Datenhandschuh ein weiteres Mittel auf, welches ein Betätigen des Eingabemittels mit dem Datenhandschuh durch den Bediener registriert.

Wird ein Koordinatensystem eingeführt, und der Aufenthaltsort in Koordinaten mit in den Datensatz eingeführt, so wird zusätzlich in den Datensatz noch eingefügt, ob der Bediener mit Hilfe des Mittels, welches die Betätigung des Eingabemittels registriert hat, das Eingabemittel auch gedrückt hat. Diese Informationen werden an die Automatisierungskomponente zur Auswertung und zur anschließenden Freigabe des Steuerbefehls gesendet.

Die Zeichnung zeigt ein Ausführungsbeispiel der Erfindung. Es zeigt die
- FIG 1: ein System 51 zum sicheren Bedienen einer Vorrichtung 50, wobei ein Bediener 1 eine Datenbrille trägt und die
- FIG 2: das System 51 zum sicheren Bedienen der Vorrichtung 50, wobei der Bediener 1 einen Datenhandschuh trägt.

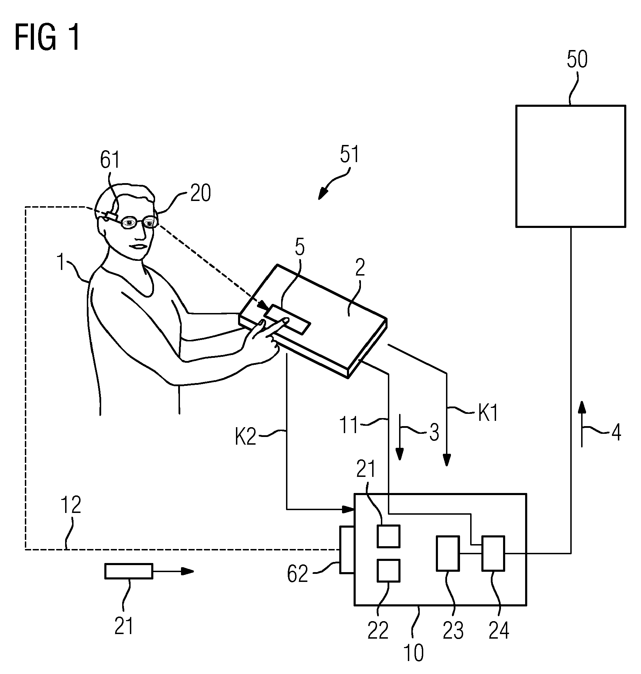

Gemäß der FIG 1 ist ein System 51 zum sicheren Bedienen einer Vorrichtung 50 dargestellt. Die Vorrichtung 50 ist beispielsweise eine schwere industrielle Presse, welche durch eine Automatisierungskomponente 10 gesteuert wird. Ein Bediener 1 kann mit Hilfe eines Eingabemittels 2 über die Automatisierungskomponente 10 die Vorrichtung 50 steuern. Für ein Steuern der Vorrichtung 50 setzt die Automatisierungskomponente 10 einen Steuerbefehl 4 zu der Vorrichtung 50 ab. Damit der Bediener 1 die Vorrichtung 50 steuern kann, setzt er durch Betätigen des Eingabemittels 2 einen Bedienbefehl 3 zur Automatisierungskomponente 10 ab. Der Bediener 1 trägt eine Sensorvorrichtung 20 an seinem Körper. Die Sensorvorrichtung 20 ist als eine Datenbrille mit einer Kamera ausgestaltet. Das Eingabemittel 2 ist als ein berührungsempfindlicher Bildschirm, beispielsweise als ein mobiles Touchpanel, ausgestaltet. Auf dem mobilen Touchpanel wird ein Bedienobjekt 5 angezeigt. Will nun der Bediener 1 die Vorrichtung 50 steuern, so betätigt er mit seinem Finger das Bedienobjekt 5, daraufhin wird der Bedienbefehl 3 über eine erste Datenverbindung 11 zur Automatisierungskomponente 10 geschickt. Damit diese Bedienung im Hinblick auf ein sicheres Bedienen der Vorrichtung 50 verifiziert werden kann, nimmt die Kamera der Datenbrille diese Bedienung auf und sendet über eine zweite Datenverbindung 12 von der Datenbrille einen beim Betätigen des Bedienobjektes 5 erfassten Datensatz 21 zur Automatisierungskomponente 10.

Da die erste Datenverbindung 11 einen ersten Kanal K1 und die zweite Datenverbindung 12 einen zweiten Kanal K2 bildet, ist damit ein zweikanaliges sicheres Eingabesystem vorhanden.

Die Automatisierungskomponente 10 weist ein Vergleichsmittel 23 auf, welches ausgestaltet ist, einen von der Sensorvorrichtung 20, also von der Datenbrille, beim Betätigen des Eingabemittels 2, also beim Betätigen des Touch-Bedien-Objektes 5, erfassten Datensatz 21 mit einem Soll-Datensatz 22 für das Eingabemittel 2 zu vergleichen. Der Soll-Datensatz 22 enthält für den Vergleich beispielsweise die Bilddaten der auf dem berührungslosen Display dargestellten Bedienobjekte. Weiterhin ist ein Freigabemittel 24 vorhanden, welches ausgestaltet ist, abhängig von einem Vergleichsergebnis einen Steuerbefehl 4 für die Vorrichtung 50 für gültig zu erklären.

Die Datenbrille weist eine Sendeeinheit 61 auf und die Automatisierungskomponente 10 weist eine Empfangseinheit 62 auf, wodurch die zweite Datenverbindung 12 als eine Funkverbindung realisiert ist.

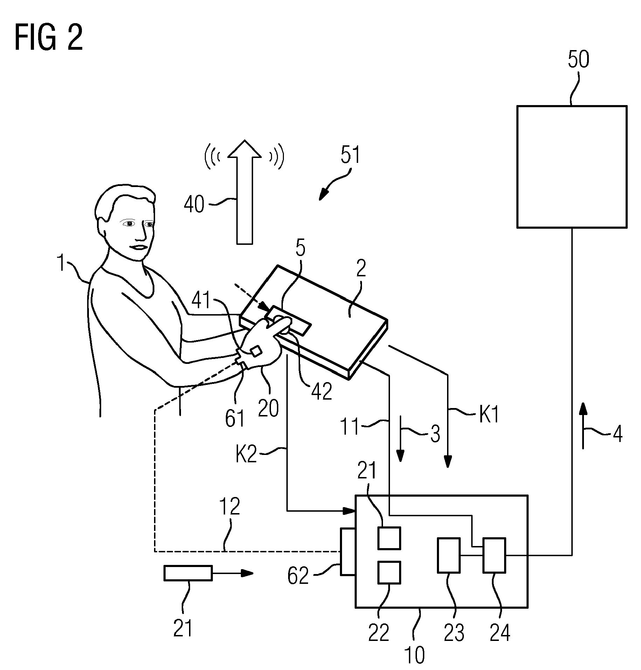

Mit der FIG 2 ist eine alternative Ausgestaltung zu der in FIG 1 beschriebenen Sensorvorrichtung 20 dargestellt. In FIG 2 ist die Sensorvorrichtung 20 nun als ein Datenhandschuh ausgestaltet. Dieser Datenhandschuh wird während der Bedienung am Körper des Benutzers 1 getragen, nämlich an seiner Hand. Auch der Datenhandschuh weist eine Sendeeinheit 61 auf, welche mit der Empfangseinheit 62 der Automatisierungskomponente 10 kommuniziert. Um zu erfassen, ob der Bediener 1 nun wirklich das Bedienobjekt 5 auf dem Eingabemittel 2 gedrückt hat, ist ein Ortungssystem 40 vorhanden, welches ausgestaltet ist, den aktuellen Aufenthaltsort des Datenhandschuhs permanent zu ermitteln. Zusätzlich weist der Datenhandschuh ein weiteres Mittel auf, nämlich einen Drucksensor 42, welcher beim Betätigen des Eingabemittels 2 mit dem Datenhandschuh dieses registriert. Das Registrieren des Betätigen des Eingabemittels bzw. des Bedienobjektes und die Koordinaten des Aufenthaltsortes des Datenhandschuhs werden in dem Datensatz 21 an die Automatisierungskomponente 10 gesendet. In der Automatisierungskomponente 10 wird der Datensatz 21 mit einem Soll-Datensatz 22 verglichen und bei Gleichheit des Aufenthaltsortes des Datenhandschuhs mit einem zuvor projektierten Aufenthaltsort des Eingabemittels wird die Freigabe für den Steuerbefehl 4 zum Steuern der Vorrichtung 50 erteilt.

## Patentansprüche

1. Verfahren zum Sicheren Bedienen einer Vorrichtung (50), wobei ein Bediener (1) ein Eingabemittel (2) betätigt und dadurch ein Bedienbefehl (3) an eine Automatisierungskomponente (10) abgesetzt wird und der Bedienbefehl (3) in der Automatisierungskomponente (10) ausgewertet wird und ein Steuerbefehl (4) für die Vorrichtung (50) erzeugt wird,
**dadurch gekennzeichnet, dass** der Bediener (1) an seinem Körper eine Sensorvorrichtung (20) trägt, wobei die Sensorvorrichtung (20) derart betrieben wird, dass die Betätigung des Eingabemittels (2) als ein Datensatz (21) erfasst wird und an die Automatisierungskomponente (10) weitergeleitet wird, wobei in der Automatisierungskomponente (10) der erfasste Datensatz (21) mit einem Soll-Datensatz (22) für das Eingabemittel (2) verglichen wird, wobei beim Erfüllen eines Vergleichskriteriums der Steuerbefehl (4) für die Vorrichtung (50) für gültig erklärt wird und an die Vorrichtung (50) übermittelt wird.

2. Verfahren nach Anspruch 1, wobei das betätigen des Eingabemittels (2) über einen ersten Kanal (K1) und einen zweiten Kanal (K2) ausgewertet wird, wobei der erste Kanal (K1) über eine erste Datenverbindung (11) zwischen dem Eingabemittel (2) und der Automatisierungskomponente (10) und der zweite Kanal (K2) über eine zweite Datenverbindung (12) zwischen der Sensorvorrichtung (20) und der Automatisierungskomponente (10) aufgebaut wird.

3. Verfahren nach Anspruch 1 oder 2, wobei der Bediener (1) als Sensorvorrichtung (20) eine Datenbrille mit Kamera trägt und die Bedienhandlung mit der Kamera erfasst wird.

4. Verfahren nach Anspruch 3, wobei als Eingabemittel (2) ein berührungsempfindlicher Bildschirm verwendet wird, und in der Automatisierungskomponente (10) ein stetiger Abgleich zwischen einem Kamerabild und einem auf dem berührungsempfindlichen Bildschirm dargestellten Objekt (5) erfolgt.

5. Verfahren nach Anspruch 1 oder 2, wobei der Bediener (1) einen Datenhandschuh trägt, und unter Verwendung eines Ortungssystems (40) der aktuellen Aufenthaltsort des Datenhandschuhs permanent ermittelt wird und zusätzlich ein Betätigen des Eingabemittels (2) ebenfalls durch den Datenhandschuh ermittelt wird.

6. System (51) zum Sicheren Bedienen einer Vorrichtung (50), umfassend
ein Eingabemittel (2),
eine Sensorvorrichtung (20) ausgestaltet um an einem Körper eines Bedieners (1) getragen werden zu können,
eine Automatisierungskomponente (10), wobei das Eingabemittel (2) über eine erste Datenverbindung (11) und die Sensorvorrichtung (20) über eine zweite Datenverbindung (12) mit der Automatisierungskomponente (10) verbunden ist, das Eingabemittel (2) ist dabei ausgestaltet bei Betätigung einen Bedienbefehl (3) an die Automatisierungskomponente (10 abzusetzen, wobei die Automatisierungskomponente (10) weiterhin dazu ausgestaltet ist, auf Basis des Bedienbefehls (3) einen Steuerbefehl (4) an die Vorrichtung (50) abzusetzen, **dadurch gekennzeichnet, dass** die Automatisierungskomponente (10) ein Vergleichsmittel (23) aufweist, welches ausgestaltet ist einen von der Sensorvorrichtung (20) beim Betätigen des Eingabemittels (2) erfassten Datensatz (21) mit einem Soll-Datensatz (22) für das Eingabemittel (2) zu vergleichen, weiterhin ein Freigabemittel (24) vorhanden ist, welches ausgestaltet ist abhängig von einem Vergleichsergebnis einen Steuerbefehl (4) für die Vorrichtung (50) für gültig zu erklären.

7. System (51) nach Anspruch 6, wobei die erste Datenverbindung (11) einen ersten Kanal (K1) und die zweite Datenverbindung (12) einen zweiten Kanal (K2) bildet und damit ein zweikanaliges, sicheres Eingabesystem vorhanden ist.

8. System (51) nach Anspruch 6 oder 7, die Sensorvorrichtung (20) als eine Datenbrille mit Kamera ausgestaltet ist

9. System (51) nach Anspruch 8, wobei das Eingabemittel (2) als ein berührungsempfindlicher Bildschirm ausgestaltet ist, und die Automatisierungskomponente (10) weiterhin dazu ausgestaltet ist einen stetigen Abgleich zwischen einem Kamerabild der Kamera und einem auf dem berührungsempfindlichen Bildschirm dargestellten Bedienobjekt (5) durchzuführen.

10. System (51) nach Anspruch 6 bis 8, wobei die Sensorvorrichtung (20) als ein Datenhandschuh ausgestaltet ist und weiterhin ein Ortungssystem (40) vorhanden ist, welches ausgestaltet ist, den aktuellen Aufenthaltsort des Datenhandschuhs permanent zu ermitteln, zusätzlich weist der Datenhandschuh ein weiteres Mittel auf, welches ein Betätigen des Eingabemittels (2) mit dem Datenhandschuh durch den Bediener (1) registriert.
